(19) Europäisches Patentamt

European Patent Office

Office européen des brevets

(11) **EP 1 626 248 A1**

(12) **EUROPÄISCHE PATENTANMELDUNG**

(43) Veröffentlichungstag:
**15.02.2006 Patentblatt 2006/07**

(51) Int Cl.:
***G01C 9/08*** *(2006.01)* ***E01C 19/26*** *(2006.01)*

(21) Anmeldenummer: **05005576.3**

(22) Anmeldetag: **15.03.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **09.08.2004 DE 102004038657**

(71) Anmelder: **BOMAG GmbH**
**56154 Boppard (DE)**

(72) Erfinder: **Schöfl, Martin**
**55471 Tiefenbach (DE)**

(74) Vertreter: **Lang, Friedrich et al**
**Patentanwälte,**
**Lang & Tomerius,**
**Bavariaring 29**
**80336 München (DE)**

(54) **Vorrichtung und Verfahren zur Bestimmung eines beschleunigungsunabhängigen Neigungswinkels**

(57)     Vorrichtung und Verfahren zur Bestimmung eines beschleunigungsunabhängigen Neigungswinkels eines mobilen Objektes, insbesondere eines Walzenzugs, wobei die Vorrichtung aufweist: einen Neigungswinkelsensor, mit dem in einer Ebene ein Neigungswinkel des Objektes erfassbar ist, einen Geschwindigkeitssensor, mit dem eine Momentangeschwindigkeit des Objektes erfassbar ist, eine Recheneinheit, mittels welcher durch die Momentangeschwindigkeit des Objektes eine Momentanbeschleunigung des Objektes ermittelbar ist, so dass mittels der Recheneinheit ein durch die Momentanbeschleunigung des Objektes verursachter Teilwinkel des erfassten Neigungswinkels und daraus ein beschleunigungsunabhängiger Neigungswinkel ermittelbar ist.

Fig. 3

EP 1 626 248 A1

**Beschreibung**

Die Erfindung betrifft eine Vorrichtung und ein Verfahren zur Bestimmung eines Neigungswinkels eines mobilen Objektes, wie zum Beispiel einer Baumaschine und insbesondere eines Walzenzugs, und insbesondere eine Vorrichtung und ein Verfahren zur Bestimmung eines beschleunigungsunabhängigen Neigungswinkels.

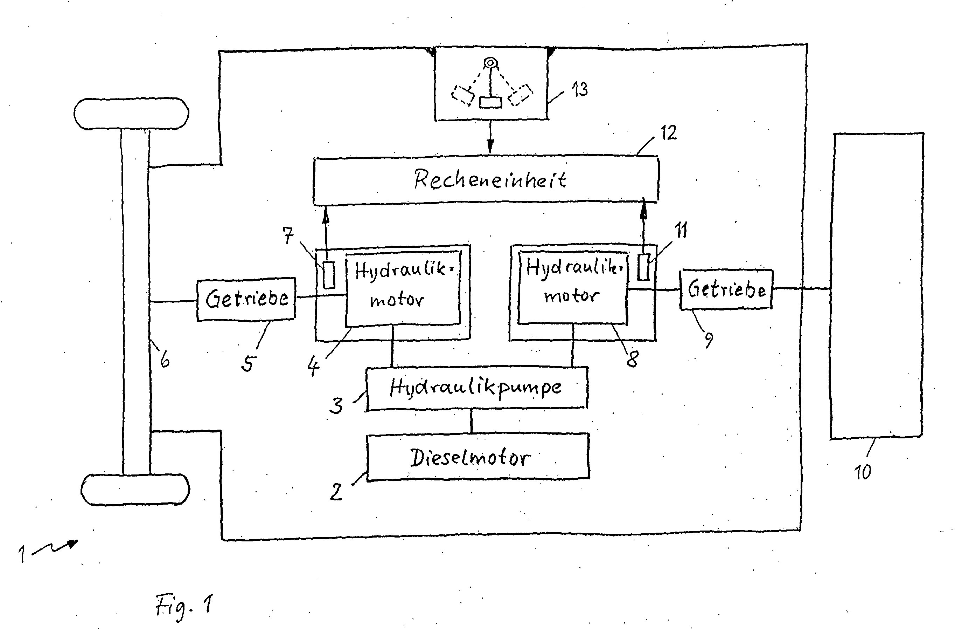

Walzenzüge werden bekanntlich zum Verdichten im Erdbau und im Verkehrswegebau eingesetzt. Gemäß dem Stand der Technik ist ein Walzenzug mit einem Fahrantrieb bekannt, welcher schematisch in Figur 1 dargestellt ist. Der Walzenzug 1 weist einen Dieselmotor 2 auf, welcher eine Hydraulikpumpe 3 wie zum Beispiel eine Verstellpumpe mit zwei Förderrichtungen antreibt. Die Leistung der Hydraulikpumpe 2 wird an zwei Hydraulikmotoren 4, 8 übertragen, welche der Hydraulikpumpe nachgeschaltet angeordnet sind. Der Hydraulikmotor 4 ist mit einem Getriebe 5 gekoppelt, mit welchem eine Hinterachse 6 angetrieben wird. Analog dazu ist der Hydraulikmotor 8 mit einem Getriebe 9 gekoppelt, welches eine Vorderachse 10 wie zum Beispiel einen Wälzkörper (Bandage) eines Walzenzugs antreibt. Um unterschiedliche Betriebsarten sicher beherrschen zu können, werden die hydraulischen Stellglieder jeweils elektrisch betätigt und gesteuert. Dies umfasst die Steuerung der Fördermenge der Hydraulikpumpe und die Steuerung des Schluckvolumens der Hydraulikmotoren.

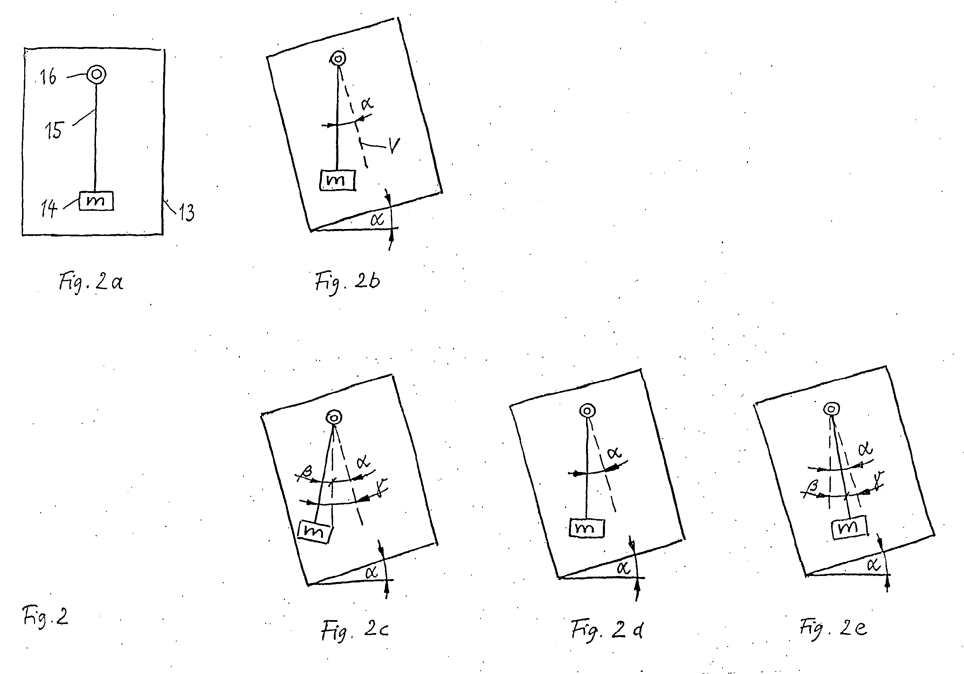

Für die Steuerung bei den Betriebsarten "Grenzlastregelung" und "Konstant-Geschwindigkeitsregelung" des Fahrantriebes des Walzenzugs ist es erforderlich, die Drehzahl der Abtriebswelle eines Hydraulikmotors bzw. die Geschwindigkeit zu erfassen, mit welcher der Fahrantrieb bewegt wird. Dies geschieht mittels Geschwindigkeitssensoren 7, 11 an den jeweiligen Hydraulikmotoren 4, 8, wobei die Signale der Geschwindigkeitssensoren einer elektrischen Steuerung (nicht dargestellt) zugeführt werden. Für die Betriebsart "Traktionskontrolle" ist es erforderlich, nicht nur die Geschwindigkeit an der Abtriebswelle des jeweiligen Hydraulikmotors, sondern zusätzlich die Neigung des Walzenzugs zur Horizontalen zu erfassen. Dies wird mittels eines Neigungswinkelsensors 13 erzielt. Der von dem Neigungswinkelsensor 13 erfasste Neigungswinkel hängt dabei von der Lage und dem Betriebszustand des Walzenzugs ab. In Figur 2 ist schematisch dargestellt, welcher Winkel von dem Neigungswinkelsensor in Abhängigkeit von der Lage und dem Betriebszustand der Walzenzug erfasst wird. Der Neigungswinkelsensor 13 weist zum Erfassen der Neigung beispielsweise ein Pendel auf, welches in Figur 2 als mathematisches Pendel dargestellt ist. Das Prinzip der Auswertung des Messsignals und die Auswerteelektronik sind nicht dargestellt.

Figur 2a zeigt einen Neigungswinkelsensor 13, welcher eine seismische Masse 14 aufweist, die an einem Pendelarm 15 aufgehängt und in einem Lager 16 gelagert ist. Ist der Walzenzug bzw. das Objekt in einer horizontalen Lage und ist das Objekt in unbewegtem Zustand oder fährt es mit konstanter Geschwindigkeit, bildet der Pendelarm zum Lot bzw. zur Objektvertikalen einen Winkel von 0°.

Befindet sich das Objekt auf einer zur Horizontalen um den Winkel α geneigten schiefen Ebene, Figur 2b, stehen Objektvertikale V und Pendelarm in einem Winkel α zueinander. Ein solcher Zustand liegt vor, wenn das Objekt entweder in unbewegtem Zustand ist oder mit konstanter Geschwindigkeit fährt.

Befindet sich das Objekt auf einer zur Horizontalen um den Winkel α geneigten Ebene und wird es positiv beschleunigt (zum Beispiel während des Anfahrens auf der geneigten Ebene), wird im Vergleich zur Situation bei Figur 2b vom Neigungswinkelsensor der Winkel γ erfasst, siehe Figur 2c. Der Winkel γ ist ein Summenwinkel aus dem Winkel α und dem Winkel β, wobei β > 0 ist und somit γ nicht gleich α ist. Anstatt der tatsächlich vorliegenden Neigung α zur Horizontalen wird von dem Neigungswinkelsensor somit der Winkel γ erfasst.

Erreicht die Beschleunigung nach dem Anfahren des Objektes, welches sich auf der um den Winkel α zur Horizontalen geneigten Ebene befindet, wieder den Wert 0, so dass eine konstante Geschwindigkeit vorliegt, erfasst der Neigungswinkelsensor den korrekten Neigungswinkel α, siehe Figur 2d, wobei γ gleich α ist.

Bei einer negativen Beschleunigung des Objektes, welches sich auf einer zur Horizontalen um α geneigten Ebene befindet, erfasst der Neigungswinkelsensor ebenfalls einen Neigungswinkel γ, wobei γ < α ist, vgl. Figur 2e. Bei einer negativen Beschleunigung wird aufgrund der Trägheit der seismischen Masse 14 diese nach vorne bewegt, so dass anstatt des Winkels α ein um den Teilwinkel β verminderter Winkel γ erfasst wird.

Die genannten Verhältnisse gelten analog zu einer um -α geneigten schiefen Ebene.

Sowohl bei einer negativen Beschleunigung als auch bei einer positiven Beschleunigung wird somit ein Winkel γ vom Neigungswinkelsensor erfasst, welcher nicht gleich dem Neigungswinkel α einer um die Horizontale geneigten Ebene ist. Wird ein auf diese Weise verfälschtes Winkelsignal zur Steuerung des Fahrantriebes weitergeleitet, reduziert sich in der Betriebsart "Traktionskontrolle" die Qualität der Steigfähigkeit des Objektes.

Im Stand der Technik sind zwar Sensoren bekannt, welche einen Neigungswinkel erfassen können, welcher weitgehend unabhängig von den oben beschriebenen Störgrößen ist. Nachteilig ist dabei jedoch, dass diese Sensoren entweder schwer beschaffbar oder aufgrund einer aufwändigen Fertigungstechnologie um ein Mehrfaches teurer sind als die nicht beschleunigungskompensierten Sensoren.

Durch die Erfindung wird die Aufgabe gelöst, eine Vorrichtung zur Bestimmung eines Neigungswinkels eines mobilen Objektes zu schaffen, welche unabhängig von der Beschleunigung des Objektes eine tatsächlich vorhandene Neigung korrekt ermittelt, dabei ohne zusätzliche Bauelemente auskommt und kostengünstig ist.

Die erfindungsgemäße Vorrichtung zur Bestimmung eines Neigungswinkels eines mobilen Objektes, insbesondere einer Baumaschine, weist auf:

- einen Neigungswinkelsensor, mit dem in einer Ebene ein Neigungswinkel des Objektes erfassbar ist,
- einen Geschwindigkeitssensor, mit dem eine Momentangeschwindigkeit des Objektes erfassbar ist,
- eine Recheneinheit, mittels welcher durch die Momentangeschwindigkeit des Objektes eine Momentanbeschleunigung des Objektes ermittelbar ist,

so dass mittels der Recheneinheit ein durch die Momentanbeschleunigung des Objektes verursachter Teilwinkel des erfassten Neigungswinkels und daraus ein beschleunigungsunabhängiger Neigungswinkel ermittelbar ist.

Dies ist vorteilhaft, da sich mit einem Geschwindigkeitssensor und einem Neigungssensor, welche zum Beispiel bei Walzenzügen üblicherweise bereits vorhanden sind, ein durch eine Störgröße wie die Anfahrbeschleunigung oder Bremsbeschleunigung verfälschtes Messergebnis so korrigiert werden kann, dass sich die tatsächlich vorhandene Neigung des Objektes zur Horizontalen ermitteln lässt.

Gemäß einer bevorzugten Ausführungsform der erfindungsgemäßen Vorrichtung kommt ein Neigungswinkelsensor zum Einsatz, welcher ein nicht beschleunigungskompensierter Neigungswinkelsensor ist. Damit wird erreicht, dass ein einfacher, kostengünstiger und einfach beschaffbarer Neigungswinkelsensor verwendbar ist.

Gemäß einer anderen bevorzugten Ausführungsform der erfindungsgemäßen Vorrichtung erfasst der Neigungswinkelsensor den Neigungswinkel mittels einer seismischen Masse. Ein derartiger Sensor kann mittels Mikrosystemtechnik so hergestellt werden, dass er unempfindlich gegen Schock, Vibrationen und Temperaturschwankungen ist.

Gemäß einer anderen bevorzugten Ausführungsform der erfindungsgemäßen Vorrichtung ist mittels der Recheneinheit durch die seismische Masse des Neigungswinkelsensors und der Momentanbeschleunigung eine beschleunigungsproportionale Größe ermittelbar. Dies ist vorteilhaft, da die Beschleunigungskraft nicht direkt erfasst werden muss, sondern sich aus zwei bekannten Größen, der seismischen Masse und der Momentanbeschleunigung, ermitteln lässt. Mittels der Beschleunigungskraft ist eine Korrekturfunktion erstellbar, mit welcher sich der durch die Momentanbeschleunigung verursachte Teilwinkel bzw. die tatsächlich vorhandene Neigung der schiefen Ebene direkt angeben lässt.

Gemäß einer anderen bevorzugten Ausführungsform der erfindungsgemäßen Vorrichtung ist der Neigungswinkelsensor ein elektrischer Neigungswinkelsensor. Dies ist vorteilhaft, da der Neigungswinkel somit als elektrische Größe, zum Beispiel als eine Ausgangsspannung, am Sensor vorliegt und für die Recheneinheit und die elektrische Steuerung des Fahrantriebes direkt verwendbar ist.

Gemäß einer anderen bevorzugten Ausführungsform der erfindungsgemäßen Vorrichtung ist der Neigungssensor am Objekt befestigt. Dies ist vorteilhaft, da somit eine hohe Zuverlässigkeit des erfassten Neigungswinkels erzielbar ist und sich Übertragungsfehler von einem externen Gerät bis zum mobilen Objekt vermeiden lassen.

Gemäß einer anderen bevorzugten Ausführungsform der erfindungsgemäßen Vorrichtung erfasst der Geschwindigkeitssensor die Momentangeschwindigkeit an einer Abtriebswelle eines Hydraulikmotors des mobilen Objektes. Dies ist vorteilhaft, da zum Beispiel mittels einer elektronischen Steuerung das dem Hydraulikmotor nachgeschaltete Getriebe stets mit der Solldrehzahl angetrieben wird.

Das erfindungsgemäße Verfahren zur Bestimmung eines Neigungswinkels eines mobilen Objektes, insbesondere einer Baumaschine, weist die Schritte auf:

- Erfassen eines Neigungswinkels in einer Ebene mittels eines Neigungswinkelsensors,
- Erfassen einer Momentangeschwindigkeit des Objektes mittels eines Geschwindigkeitssensors,
- Ermitteln einer Momentanbeschleunigung des Objektes durch die Momentangeschwindigkeit des Objektes mittels einer Recheneinheit,

so dass mittels der Recheneinheit ein durch die Momentanbeschleunigung des Objektes verursachter Teilwinkel des erfassten Neigungswinkels und daraus ein beschleunigungsunabhängiger Neigungswinkel ermittelt wird.

Dies ist vorteilhaft, da mit einem Geschwindigkeitssensor und einem Neigungssensor, welche zum Beispiel bei Walzenzügen üblicherweise bereits vorhanden sind, ein durch eine Störgröße wie die Anfahrbeschleunigung oder Bremsbeschleunigung verfälschtes Messergebnis so korrigiert wird, dass die tatsächlich vorhandene Neigung des Objektes zur Horizontalen ermittelt wird.

Gemäß einer bevorzugten Ausführungsform des erfindungsgemäßen Verfahrens wird mittels der Recheneinheit durch die seismische Masse des Neigungswinkelsensors und die Momentanbeschleunigung eine Beschleunigungskraft ermittelt. Dies ist vorteilhaft, da die Beschleunigungskraft nicht direkt erfasst werden muss, sondern sich aus zwei bekannten Größen ermitteln lässt. Mittels der Beschleunigungskraft ist eine Korrekturfunktion erstellbar, mit welcher sich der durch die Momentanbeschleunigung verursachte Teilwinkel direkt angeben lässt.

Nach einem weiteren Merkmal der Erfindung ist die Verwendung der Vorrichtung und des Verfahrens für eine Traktionskontrolle des mobilen Objektes vorgesehen. Dies ist vorteilhaft, da sich somit die Traktionskontrolle und die Steigfähigkeit des mobilen Objektes verbessern lässt.

Im Folgenden wird die Erfindung anhand bevorzugter Ausführungsformen mit Bezugnahme auf die Zeichnung erläutert. In der Zeichnung zeigen:

| | |
|---|---|
| Figur 1 | eine schematische Darstellung des Fahrantriebs eines Walzenzugs nach dem Stand der Technik; |
| Figuren 2a bis 2e | schematische Darstellungen eines Neigungswinkelsensors in Abhängigkeit von der Lage und dem Betriebszustand des Walzenzugs; |
| Figur 3 | eine schematische Darstellung der Kräfteverhältnisse an der seismischen Masse des Neigungswinkelsensors; |
| Figur 4 | ein Diagramm mit den Größen Geschwindigkeit, Beschleunigung, Teilwinkel des erfassten Neigungswinkels und Sensorausgangsgröße, jeweils in Abhängigkeit von der Zeit. |

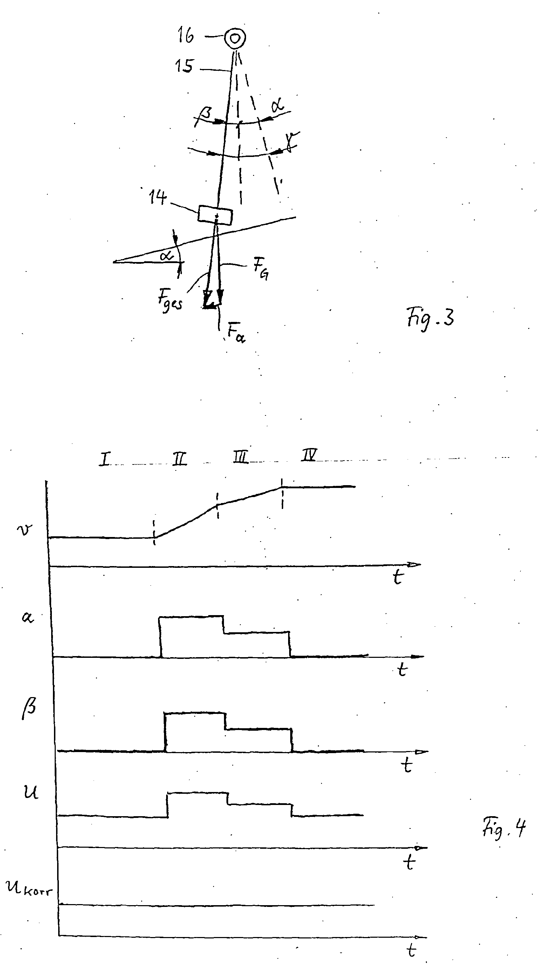

In Figur 3 ist schematisch ein Pendel dargestellt, welches eine seismische Masse 14, einen Pendelarm 15 und ein Lager 16 aufweist. Das Lager kann, wie aus Figur 3 ersichtlich ist, ein Drehlager sein, welches eine für die Neigungsmessung zu vernachlässigende Reibung besitzt. Statt des Drehlagers mit einem daran befestigten Pendelarm und einer daran befestigten Masse 14 kann jedoch auch eine einseitig eingespannte Blattfeder mit einer am Ende vorgesehenen Masse 14 zum Einsatz kommen. Bei einem mathematischen Pendel wird angenommen, dass der Pendelarm masselos ist und die gesamte Masse 14 in einem Punkt zusammengefasst ist. Für die erfindungsgemäße Vorrichtung ist es hingegen keine Voraussetzung, dass ein angenähert mathematisches Pendel vorliegt. Auch ein physikalisches Pendel ist denkbar, bei dem ein Drehkörper in einem Drehpunkt aufgehängt ist, welcher sich in dem Drehkörper befindet. Beliebige Zwischenformen, welche sich zwischen dem mathematischen Pendel und dem physikalischen Pendel einordnen lassen, sind bei der erfindungsgemäßen Vorrichtung zur Bestimmung eines Neigungswinkels denkbar. Bei jeder Konstruktion eines Neigungswinkelsensors ist eine Proportionalität zwischen tatsächlicher Neigung und einem erfassten Neigungswinkel erforderlich.

Bei einem elektrischen Neigungswinkelsensor geschieht die Umsetzung des erfassten Neigungswinkels in ein elektrisches Ausgangssignal beispielsweise mittels eines Differentialkondensators. Die seismische Masse ist dort an einer Feder aufgehängt und bildet eine bewegliche Mittelelektrode neben zwei benachbarten Festelektroden. Eine Neigung des Sensorelementes bewirkt eine Auslenkung der seismischen Masse aus der Neutrallage und damit eine Verstimmung des Differentialkondensators. Eine solche Kapazitätsänderung kann mit einer geeigneten Auswerteelektronik in eine weiter zu verarbeitende Größe wie eine elektrische Spannung, eine Frequenz oder eine Pulsweite umgewandelt werden. Der Neigungssensor kann auch nach dem konduktometrischen Prinzip arbeiten, bei dem in Abhängigkeit von der Neigung des Sensors äußere Elektroden von einer elektrolytischen Flüssigkeit unterschiedlich benetzt werden, wodurch ein neigungsabhängiger elektrischer Widerstand entsteht. Eine andere Möglichkeit besteht darin, dass in Abhängigkeit von der Neigung eines Pendels ein Schiebewiderstand verstellt wird.

Um den in Figur 3 dargestellten Teilwinkel β zu ermitteln, welcher bei Einwirkung einer Störgröße wie einer Beschleunigungskraft auftritt, kann zum einen die Richtung und die Länge eines Beschleunigungskraftvektors $\vec{F_a}$ ermittelt werden. Ist zusätzlich die Richtung und die Länge des Gewichtskraftvektors $\vec{F_G}$ bekannt, ergibt sich somit durch Vektoraddition die Gesamtkraft $\vec{F_{ges}}$, welche auf die seismische Masse 14 wirkt und das Pendel entsprechend auslenkt. Dieser Gesamtkraft kann der Teilwinkel β zugeordnet werden, zum Beispiel durch Berechnung oder durch Experiment. Bei der in Figur 3 dargestellten Skizze wird vereinfachend davon ausgegangen, dass zwischen dem Vektor der Gesamtkraft $\vec{F_{ges}}$ und dem Winkel β eine direkte und mit Faktor 1 gebildete Proportionalität besteht. Tatsächlich kann jedoch eine vom Faktor 1 abweichende Proportionalität gegeben sein. Dies ändert hingegen nichts daran, dass der Gesamtkraft ein Teilwinkel zugeordnet werden kann.

Die Beschleunigungskraft $F_a$ berechnet sich aus dem Produkt des Betrages der seismischen Masse 14 mit der momentanen Beschleunigung $a(t)$ gemäß der Gleichung

$$F_a(t) = m \cdot a(t). \qquad (1)$$

Die Beschleunigung $a(t)$ ergibt sich durch Differenzieren der Momentangeschwindigkeit $v(t)$ nach der Zeit gemäß

$$a(t) = \mathrm{d}v(t)/\mathrm{d}t. \qquad (2)$$

Bei der erfindungsgemäßen Vorrichtung wird diese Berechnung von der Recheneinheit 12 durchgeführt.

Die Geschwindigkeit des Walzenzugs ist aufgrund eines Messsignals des Geschwindigkeitssensors 7, 11 an der Abtriebswelle eines Hydraulikmotors bekannt. Falls die Geschwindigkeit keine Steuerungs- oder Regelungsgröße ist, stellt sie mindestens eine Anzeigegröße dar, welche für die Berechnung nach den Gleichungen (1) oder (2) ebenso verwendet werden kann.

Durch Kenntnis der Beschleunigungskraft $F_a$ und des zugehörigen Teilwinkels $\beta$ kann aus dem erfassten Neigungswinkel $\gamma$ der tatsächlich vorliegende Neigungswinkel $\alpha$ der zur Horizontalen geneigten schiefen Ebene ermittelt werden, vgl. Figur 3.

In Figur 4 ist schematisch der Zusammenhang zwischen Geschwindigkeit $v$, Beschleunigung $a$, Teilwinkel $\beta$ und einer Ausgangsgröße $U$ des Neigungswinkelsensors in Abhängigkeit von der Zeit dargestellt. Bei konstanter Geschwindigkeit, Phase I, beträgt die Beschleunigung $a = 0$. Der zugehörige Teilwinkel beträgt $\beta = 0$, vgl. Figuren 2a, 2b. Die Ausgangsgröße des Neigungswinkelsensors weist einen positiven Wert auf, wenn das Objekt auf einer um den Winkel $\alpha$ geneigten schiefen Ebene entlang fährt. Bei konstant zunehmender Momentangeschwindigkeit, Phase II, berechnet sich durch Differenzieren nach der Zeit eine konstante positive Momentanbeschleunigung, so dass die seismische Masse konstant zusätzlich um den Teilwinkel $\beta$ ausgelenkt wird, vgl. Figur 2c. Die Ausgangsgröße U weist einen größeren Wert auf als bei Phase I. Bei weiterhin zunehmender Momentangeschwindigkeit, jedoch mit abnehmender Steigung, Phase III, berechnet sich eine weiterhin konstante positive Momentanbeschleunigung, die seismische Masse 14 wird um einen kleineren Teilwinkel $\beta$ ausgelenkt. Die Ausgangsgröße U weist einen niedrigeren Wert auf als bei Phase II. Nimmt die Momentangeschwindigkeit nicht mehr zu, Phase IV, beträgt die Momentanbeschleunigung $a = 0$ und der Teilwinkel $\beta = 0$, vgl. Figur 2d.

Bei einem elektrischen Neigungssensor gibt dieser einen dem erfassten Neigungswinkel $\gamma$ zugehörigen Ausgangswert, zum Beispiel eine Ausgangsspannung $U$, an. Bei Kenntnis des Teilwinkels $\beta$ lässt sich der Ausgangswert des Neigungswinkelsensors dem gemäß zu einer Ausgangsgröße $U_{korr}$ korrigieren, siehe Figur 4.

Mit der erfindungsgemäßen Vorrichtung ist es nicht zwingend erforderlich, die Beschleunigungskraft $F_a$ zu bestimmen, um den Teilwinkel $\beta$ anzugeben und damit einen beschleunigungsunabhängigen Neigungswinkel zu ermitteln. Es genügt, wenn bei bekanntem Neigungswinkel $\alpha$ einer zur Horizontalen geneigten Ebene experimentell eine Zuordnung zwischen Beschleunigung und erfasstem Neigungswinkel $\gamma$ bzw. Ausgangsgröße U vorgenommen wird. Die Differenz aus erfasstem Neigungswinkel $\gamma$ und dem tatsächlichen Neigungswinkel $\alpha$ einer zur Horizontalen geneigten Ebene ergibt den für die Momentanbeschleunigung $a$ zugehörigen Teilwinkel $\beta$. Diese Proportionalität aus Momentanbeschleunigung $a$ und Teilwinkel $\beta$, welcher als Korrekturwinkel aufzufassen ist, kann in Form einer Korrekturfunktion $f_{korr}(a(t))$ auf die Ausgangsgröße U angewandt werden. Die momentane Ausgangsgröße $U(t)$ ist ohne Anwendung der Korrekturfunktion $f_{korr}(a(t))$ eine vom tatsächlich erfassten Neigungswinkel $\gamma$ und der momentanen Beschleunigung $a(t)$ des Objektes abhängige Größe:

$$U(t) = \mathrm{f}(\gamma, a(t)) \qquad (3)$$

Wird die Korrekturfunktion angewandt, reduziert sich die Abhängigkeit der momentanen Ausgangsgröße $U(t)$ nur noch auf den tatsächlichen Neigungswinkel $\alpha$:

$$U(t)_{korr} = \mathrm{f}(\gamma, a(t)) \otimes \mathrm{f}_{korr}(a(t)) = \mathrm{f}(\alpha). \qquad (4)$$

Durch die erfindungsgemäße Vorrichtung und das erfindungsgemäße Verfahren wird somit ein Neigungssignal ermittelt, welches unabhängig von der Beschleunigung des Walzenzugs die tatsächlich vorhandene Neigung des Walzenzugs angibt.

**Patentansprüche**

1. Vorrichtung zur Bestimmung eines Neigungswinkels eines mobilen Objektes, insbesondere einer Baumaschine, aufweisend:

- einen Neigungswinkelsensor, mit dem in einer Ebene ein Neigungswinkel des Objektes erfassbar ist,
- einen Geschwindigkeitssensor, mit dem eine Momentangeschwindigkeit des Objektes erfassbar ist,
- eine Recheneinheit, mittels welcher durch die Momentangeschwindigkeit des Objektes eine Momentanbeschleunigung des Objektes ermittelbar ist,

so dass mittels der Recheneinheit ein durch die Momentanbeschleunigung des Objektes verursachter Teilwinkel des erfassten Neigungswinkels und daraus ein beschleunigungsunabhängiger Neigungswinkel ermittelbar ist.

2.   Vorrichtung nach Anspruch 1,
**dadurch gekennzeichnet,**
**dass** ein Neigungswinkelsensor zum Einsatz kommt, welcher ein nicht beschleunigungskompensierter Neigungswinkelsensor ist.

3.   Vorrichtung nach den Ansprüchen 1 oder 2,
**dadurch gekennzeichnet,**
**dass** von dem Neigungswinkelsensor der Neigungswinkel mittels einer seismischen Masse erfassbar ist.

4.   Vorrichtung nach einem der vorherigen Ansprüche,
**dadurch gekennzeichnet,**
**dass** mittels der Recheneinheit aus der seismischen Masse des Neigungswinkelsensors und der Momentanbeschleunigung eine beschleunigungsproportionale Größe ermittelbar ist.

5.   Vorrichtung nach einem der vorherigen Ansprüche,
**dadurch gekennzeichnet,**
**dass** der Neigungswinkelsensor ein elektrischer Neigungswinkelsensor ist.

6.   Vorrichtung nach einem der vorherigen Ansprüche,
**dadurch gekennzeichnet,**
**dass** der Neigungssensor am Objekt befestigt ist.

7.   Vorrichtung nach einem der vorherigen Ansprüche,
**dadurch gekennzeichnet,**
**dass** der Geschwindigkeitssensor die Momentangeschwindigkeit an einer Abtriebswelle eines Hydraulikmotors des mobilen Objektes erfasst.

8.   Verfahren zur Bestimmung eines Neigungswinkels eines mobilen Objektes, insbesondere einer Baumaschine, welches die Schritte aufweist:

- Erfassen eines Neigungswinkels in einer Ebene mittels eines Neigungswinkelsensors,
- Erfassen einer Momentangeschwindigkeit des Objektes mittels eines Geschwindigkeitssensors,
- Ermitteln einer Momentanbeschleunigung des Objektes durch die Momentangeschwindigkeit des Objektes mittels einer Recheneinheit,

so dass mittels der Recheneinheit ein durch die Momentanbeschleunigung des Objektes verursachter Teilwinkel des erfassten Neigungswinkels und daraus ein beschleunigungsunabhängiger Neigungswinkel ermittelt wird.

9.   Verfahren nach Anspruch 8,
**dadurch gekennzeichnet,**
**dass** mittels der Recheneinheit durch die seismische Masse des Neigungswinkelsensors und die Momentanbeschleunigung eine beschleunigungsproportionale Größe ermittelt wird.

10.  Verwendung der Vorrichtung nach einem der Ansprüche 1 bis 8 für eine Traktionskontrolle des mobilen Objektes.

11.  Verwendung des Verfahrens nach einem der Ansprüche 9 oder 10 für eine Traktionskontrolle des mobilen Objektes.

Fig. 1

EP 1 626 248 A1

Fig. 2a

Fig. 2b

Fig. 2c

Fig. 2d

Fig. 2e

Fig. 2

Fig. 3

Fig. 4

**Europäisches Patentamt**

**EUROPÄISCHER RECHERCHENBERICHT**

Nummer der Anmeldung

EP 05 00 5576

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 43 28 893 A1 (HITACHI, LTD., TOKIO/TOKYO, JP) 10. März 1994 (1994-03-10) | 1-4,6, 8-11 | G01C9/08 E01C19/26 |
| Y | * Seite 7, Zeile 6 - Zeile 42 * * Seite 16, Zeile 23 - Zeile 38; Abbildung 5 * ----- | 7 | |
| Y | EP 0 765 773 A (INGERSOLL-RAND COMPANY; SAUER-DANFOSS INC) 2. April 1997 (1997-04-02) * Spalte 4, Zeile 6 - Zeile 11 * * Spalte 4, Zeile 35 - Zeile 58 * * Spalte 5, Zeile 13 - Zeile 20 * ----- | 7 | |
| X | EP 0 590 312 A (EATON CORPORATION) 6. April 1994 (1994-04-06) * Seite 2, Zeile 25 - Seite 3, Zeile 15 * * Seite 3, Zeile 40 - Zeile 48; Abbildungen 2,3 * ----- | 1,5 | |
| X | US 4 531 300 A (HEIDEL ET AL) 30. Juli 1985 (1985-07-30) * Spalte 4, Zeile 12 - Zeile 50 * ----- | 1,5 | RECHERCHIERTE SACHGEBIETE (Int.Cl.7) G01C E01C |

Der vorliegende Recherchenbericht wurde für alle Patentansprüche erstellt

| Recherchenort | Abschlußdatum der Recherche | Prüfer |
|---|---|---|
| Den Haag | 3. November 2005 | Hoekstra, F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

............................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 05 00 5576

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-11-2005

| Im Recherchenbericht angeführtes Patentdokument | Datum der Veröffentlichung | Mitglied(er) der Patentfamilie | Datum der Veröffentlichung |
|---|---|---|---|
| DE 4328893 A1 | 10-03-1994 | US 5925087 A | 20-07-1999 |
| EP 0765773 A | 02-04-1997 | AU 680797 B2 | 07-08-1997 |
| | | AU 6589296 A | 10-04-1997 |
| | | DE 69613187 D1 | 12-07-2001 |
| | | DE 69613187 T2 | 14-03-2002 |
| EP 0590312 A | 06-04-1994 | AR 248193 A1 | 30-06-1995 |
| | | AU 660109 B2 | 08-06-1995 |
| | | AU 4734793 A | 14-04-1994 |
| | | BR 9303561 A | 24-05-1994 |
| | | CA 2105240 A1 | 31-03-1994 |
| | | CN 1085656 A | 20-04-1994 |
| | | JP 6201380 A | 19-07-1994 |
| | | MX 9306117 A1 | 31-01-1995 |
| | | US 5351540 A | 04-10-1994 |
| | | ZA 9307158 A | 23-05-1994 |
| US 4531300 A | 30-07-1985 | EP 0161873 A2 | 21-11-1985 |
| | | JP 60238712 A | 27-11-1985 |

EPO FORM P0461

Für nähere Einzelheiten zu diesem Anhang : siehe Amtsblatt des Europäischen Patentamts, Nr.12/82